(19) Europäisches Patentamt / European Patent Office / Office européen des brevets

(11) EP 4 261 064 A1

(12) **EUROPEAN PATENT APPLICATION**
published in accordance with Art. 153(4) EPC

(43) Date of publication:
18.10.2023 Bulletin 2023/42

(21) Application number: 21906430.0

(22) Date of filing: 07.12.2021

(51) International Patent Classification (IPC):
B60K 1/04 (2019.01)          H01M 50/204 (2021.01)
H01M 50/249 (2021.01)          H01M 50/28 (2021.01)
H01M 50/282 (2021.01)

(52) Cooperative Patent Classification (CPC):
B60K 1/04; H01M 50/204; H01M 50/249;
H01M 50/28; H01M 50/282; Y02E 60/10

(86) International application number:
PCT/JP2021/044863

(87) International publication number:
WO 2022/131067 (23.06.2022 Gazette 2022/25)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 14.12.2020 JP 2020206897

(71) Applicant: MAFTEC Co., Ltd.
Tokyo 100-0004 (JP)

(72) Inventors:
• SHIRAKU, Hideyuki
Tokyo 100-8251 (JP)
• YANO, Akihiro
Tokyo 100-8251 (JP)
• KAWAHARA, Kazunori
Tokyo 100-8251 (JP)

(74) Representative: Hoffmann Eitle
Patent- und Rechtsanwälte PartmbB
Arabellastraße 30
81925 München (DE)

(54) **BATTERY PACK COVER, BATTERY PACK UNIT, AND ELECTRIC MOBILITY**

(57) Provided are a battery pack cover (3) having excellent flame-shielding properties, a battery pack unit (1) that uses this battery pack cover, and electric mobility that uses this battery pack unit. The battery pack cover used in the battery pack includes: a cover base material (5); and an inorganic fiber-formed article (4) having a tensile strength of 20N or more. The battery pack unit includes this battery pack cover. The electric mobility includes this battery pack unit.

Fig. 1

EP 4 261 064 A1

**Description**

Technical Field

The present invention relates to a battery pack cover, a battery pack unit, and an electric mobility.

Background Art

A battery pack unit for use in electric mobility such as an electric vehicle includes a housing with a partially open portion, a battery pack arranged in the housing, and a battery pack cover that closes the open portion (Patent Literature 1: WO2012/167921) . Paragraph 0081 of Patent Literature 1 exemplifies aluminum, aluminum alloy, magnesium, magnesium alloy, AISiC, titanium, titanium alloy, steel, stainless steel, and special steel as constituent materials of the battery pack cover.

In battery modules for use in mobility such as electric vehicles, heat insulating materials or heat absorbing materials are sometimes provided between battery cells as a countermeasure against thermal runaway of the battery.

Patent Literature 2 (EP2506336A1) describes a thermal management system for minimizing the effects of thermal runaway comprising a plurality of batteries and an airtight battery pack enclosure, the battery pack enclosure having a cavity with gas exhaust port integrated into an outer wall thereof, wherein the gas exhaust port is configured to pass gas out of the battery pack enclosure when at least one battery undergoes thermal runaway.

In addition, a battery unit is known in which a mica sheet or the like is attached to the side of the battery pack cover that covers the battery module to improve fire resistance.

Prior Art List

Patent Literature

 PTL 1: WO2012/167921
 PTL 2: EP2506336A1

Summary of Invention

Technical Problem

An energy density of a battery module to be installed in an electric vehicle tends to increase in order to extend the driving distance, and it has been demanded increasingly to suppress battery heat generation and thermal runaway risk. A heat insulating material or the like provided between battery cells can not always prevent fire. It is therefore an object of the present invention to provide a battery pack cover that is excellent in flame-shielding properties, and is capable of delaying spread of fire to an interior member in the event of an uncontrollable fire. Another object of the present invention is to provide a battery pack unit using this battery pack cover and an electric mobility (mobile body) using this battery pack unit.

Solution to Problem

Mica sheets are rigid and fragile minerals, so they are easily damaged by vibration during running. In addition, weight of a car body becomes heavy when functions such as flame insulation or the like are satisfied. On the other hand, when a flame-shielding structure is lightweight, it is easy to be blown away by the blast, and the flame-shielding property to shield the flames spewing out from the battery pack is insufficient. Therefore, the present inventors have focused on the fact that an inorganic fiber-formed article having a tensile strength within a specific range can withstand the blast that blows out during thermal runaway of a battery and can prevent the penetration of flames. We have found that the inorganic fiber-formed article improves the flame-shielding property of a battery pack cover without impairing a load property. The gist of the present invention is as follows.

[1] A battery pack cover for use in a battery pack, wherein the battery pack cover comprises a cover base material and an inorganic fiber-formed article having a tensile strength of 20 N or more in the following tensile test. <Tensile test> A test piece with a width of 25 mm and a length of 160 mm is punched out from the inorganic fiber-formed article, the test piece is pulled in the longitudinal direction at a speed of 25 mm/min using a tensile tester, and let the maximum load value be the tensile strength.

[2] The battery pack cover according to [1], wherein the cover base material is a metal base material.

[3] The battery pack cover according to [1] or [2], wherein the battery pack cover is a laminate of the cover base material and the inorganic fiber-formed article.

[4] The battery pack cover according to any one of [1] to [3], wherein the battery pack cover does not penetrate through a flame test at a flame temperature of 1000°C for 5 minutes.

[5] The battery pack cover according to any one of [1] to [4], wherein the inorganic fiber-formed article is composed of inorganic fibers having an average fiber length of 3 mm or more.

[6] The battery pack cover according to any one of [1] to [5], wherein the inorganic fiber-formed article is a woven fabric or a non-woven fabric.

[7] The battery pack cover according to any one of [1] to [6], wherein the inorganic fiber-formed article is a needled blanket.

[8] A battery pack unit comprising the battery pack cover according to any one of [1] to [7] and a battery pack.

[9] The battery pack unit according to [8], wherein the inorganic fiber-formed article of the battery pack cover is arranged on the battery pack side.

[10] An electric mobility comprising the battery pack unit according to [8] or [9] .

Advantageous Effects of Invention

The inorganic fiber-formed article used in the present invention has a tensile strength of 20 N or more, and is excellent in properties of preventing penetration of a flame during thermal runaway of the battery. Therefore, the battery cover provided with this inorganic fiber-formed article has an excellent flame-shielding property.

Brief Description of Drawing

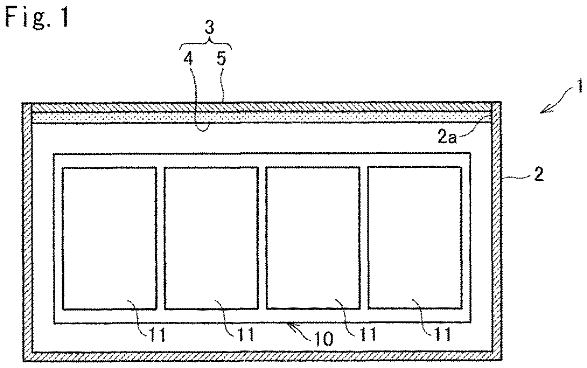

[Fig. 1] Fig. 1 is a schematic cross-sectional view of a battery pack unit.

Description of Embodiments

The battery pack cover of the present invention is used for battery pack units. The battery pack unit has a battery pack and the battery pack cover.

FIG. 1 is a schematic cross-sectional view showing an example of the battery pack unit. The battery pack unit 1 has a housing 2 with an open portion 2a, a battery pack cover 3 closing the open portion 2a, and a battery pack 10 arranged in the housing 2. However, the housing is not necessarily required.

The battery pack cover 3 has an inorganic fiber-formed article 4 and a cover base material 5. The inorganic fiber-formed article 4 and the cover base material 5 are both plate-shaped and overlapped each other. However, both may be adhered with an adhesive. The inorganic fiber-formed article 4 is arranged inside the battery pack unit 1 with respect to the cover base material 5 .

The battery pack 10 arranged within the housing 2 includes a plurality of battery modules 11 .

Since the battery pack unit 1 can improve the flame-shielding property of the battery pack cover without impairing the load property, it is suitable for use in a battery of electric mobility such as electric vehicles, electric motorcycles, and ships. The battery is not particularly limited, but examples of the battery include a secondary battery including a lithium-ion battery, nickel-hydrogen battery, lithium-sulfur battery, nickel-cadmium battery, nickel-iron battery, nickel-zinc battery, sodium-sulfur battery, lead-acid battery, and air battery. Among these, a lithium ion battery is preferable. The battery pack cover is preferably applicable for suppressing thermal runaway of the lithium ion battery.

[Cover base material]

The cover base material 5 of the battery pack cover 3 may be a housing material such as a metal base material or a reinforced resin base material. From the viewpoint of flame shielding property, a metal base material is preferred, and the metal is preferably aluminum, aluminum alloys, magnesium, magnesium alloys, titanium, titanium alloys, iron, stainless steel, or the like. The thickness of the metal base material 5 is preferably about 0.1 to 10 mm, particularly about 0.3 to 7 mm, but is not limitative thereto.

[Inorganic Fiber-Formed Article]

The inorganic fiber-formed article used in the present invention has a tensile strength of 20N or higher, preferably 25N or higher, and particularly preferably 30N or higher. The higher the tensile strength of the inorganic fiber-formed article, the more preferable it is. Although there is no upper limit, the tensile strength is preferably 100 kN or less, particularly preferably 50 kN or less. Tensile strength is a value measured by the method described in Examples later-described.

Examples of the inorganic fibers included in the inorganic fiber-formed article include, but are not particularly limited to, single-component fibers composed of, for example, silica, alumina/silica, silica or alumina/silica-containing zirconia, spinel, or titania; and composite fibers containing these fibers. In particular, alumina/silica-based fibers are preferred, and crystalline alumina/silica-based fibers are particularly preferred. The composition ratio (by weight) of alumina/silica of the alumina/silica-based fibers is preferably in the range of 60 to 95/40 to 5, more preferably 70 to 84/30 to 16, particularly preferably 70 to 76/30 to 24.

The inorganic fibers preferably have an average fiber length 1 mm or more, more preferably 2 mm or more, further more preferably 3 mm or more. The inorganic fibers has an average fiber length of $3.0 \times 10^3$ mm or less, more preferably $1.0 \times 10^3$ mm or less. The inorganic fibers preferably have an average fiber diameter of 3 to 10 $\mu$m, particularly preferably 5 to 8 $\mu$m. When the average fiber length and the average fiber diameter of the inorganic fibers are within the above ranges, the inorganic fiber-formed article has a high tensile strength, which is preferred. When the average fiber length and the average fiber diameter of the inorganic fibers are within the above ranges, the amount of dust emitted into the air can be reduced, which is preferred. The average fiber length of the inorganic fibers is the average value of 300 fibers measured by microscopic observation. The average fiber diameter is the average value of 100 fibers measured by microscopic observation.

The inorganic fiber-formed article used in the present invention is not limited in its manufacturing method or shape as long as it has the specific tensile strength. The inorganic fiber-formed article is preferably a woven fabric or a nonwoven fabric composed of the inorganic fibers. When the inorganic fiber-formed article is a woven fabric composed of the inorganic fibers, the production method is not limited, and a known method of weaving into a woven fabric can be applied. When the inorganic fiber-formed article is a nonwoven fabric composed of the inorganic fibers, the manufacturing method is not limited, but a needled blanket subjected to a needling treatment is preferable. By performing the needling treatment, needle marks are formed on the inorganic fiber-formed article. The inorganic fiber-formed article has a mat shape having a predetermined thickness. Hereinafter, a surface of the inorganic fiber-formed article perpendicular to the thickness direction is sometimes referred to as "a mat surface". A side face (a face extending in the thickness direction) perpendicular to the mat surface of the inorganic fiber-formed article is sometimes referred to as "an end face".

In one aspect of the present invention, the inorganic fiber-formed article has needle marks. A needle mark density indicates the number of needle marks per unit area (1 cm$^2$) of the mat surface of the inorganic fiber-formed article after firing.

When a mat surface of the inorganic fiber-formed article is irradiated with visible light, transmitted light is observed as spots of light on a peeled surface because the amount of light transmitted through the needle marks is larger than the amount of light transmitted through a region other than the needle marks . The number of needle marks is determined by counting the numbers of the spots of light transmitted to the peeled surface.

In the present invention, the number of needle marks (needle mark density) per unit area (1 cm$^2$) of the mat surface of the inorganic fiber-formed article is preferably 1 mark/cm$^2$ or more, more preferably 3 marks/cm$^2$ or more, and preferably 100 marks/cm$^2$ or less, more preferably 50 marks/cm$^2$ or less as the average value of the entire mat surface.

A basis weight (mass per unit area) of the inorganic fiber-formed article is 50 g/m$^2$ or more, preferably 80 g/m$^2$ or more, more preferably 100 g/m$^2$ or more, still more preferably 200 g/m$^2$ or more, and particularly preferably 400 g/m$^2$ or more. The basis weight of the inorganic fiber-formed article is preferably 3000 g/m$^2$ or less, more preferably 2500 g/m$^2$ or less, and particularly preferably 2000 g/m$^2$ or less.

The thickness of the inorganic fiber-formed article is preferably 0.1 mm or more, more preferably 0.3 mm or more, and particularly preferably 0.5 mm or more. The thickness of the inorganic fiber-formed article is preferably 25 mm or less, more preferably 20 mm or less, and particularly preferably 15 mm or less. When the basis weight and the thickness of the inorganic fiber-formed article are within the ranges, the tensile strength of the inorganic fiber-formed article is within an appropriate range, which is preferable. It is also preferable in terms of load property and space efficiency in a mobility.

The basis weight and the thickness of the inorganic fiber-formed article can be adjusted to the above ranges by adjusting the amount of fibers per unit area when sheets consisting of the inorganic fibers are stacked using a folding machine to constitute the inorganic fiber-formed article.

[Method for Producing Inorganic Fiber-Formed Article]

The inorganic fiber-formed article can be produced by a method including a step of forming a mat-like aggregate of an inorganic fiber precursor by a sol-gel method, a step of subjecting the resulting mat-like aggregate of the inorganic fiber precursor to needling , and a firing step of firing the mat-like aggregate of the inorganic fiber precursor subjected to the needling into an inorganic fiber-formed article. However, the inorganic fiber-formed article may be produced by another method.

While an example of the method for producing an inorganic fiber formed article will be described below by taking a method for producing an alumina/silica-based fiber formed article as an example, the inorganic fiber-formed article of the present invention is not limited to the alumina/silica-based fiber formed article. As described above, the inorganic fiber-formed article may be a formed article formed of fibers of silica, zirconia, spinel, or titania, or composite fibers thereof.

<Spinning Step>

To produce a mat-like aggregate of alumina/silica-based fibers by a sol-gel method, fibers are spun from a spinning solution containing basic aluminum chloride, a silicon compound, an organic polymer serving as a thickener, and water by a blowing method into an alumina/silica fiber precursor aggregate.

<<Preparation of Spinning Solution>>

Basic aluminum chloride $Al(OH)_{3-x}Cl_x$ can be prepared by, for example, dissolving metal aluminum in hydrochloric acid or an aqueous solution of aluminum chloride. In the chemical formula described above, the value of x is usually in the range of 0.45 to 0.54 and preferably 0.5 to 0.53. As the silicon compound, a silica sol is preferably used. Tetraethyl silicate or a water-soluble silicon compound, such as a water-soluble siloxane derivative, may also be used. As the organic polymer, for example, a water-soluble polymer compound, such as polyvinyl alcohol, polyethylene glycol, or polyacrylamide, is preferably used. They usually have a degree of polymerization of 1,000 to 3,000.

With respect to the spinning solution, the ratio of aluminum originating from basic aluminum chloride to silicon originating from the silicon compound is usually 99:1 to 65:35 and preferably 99:1 to 70: 30 in terms of $Al_2O_3$ and $SiO_2$ on a weight basis. The spinning solution preferably has an aluminum concentration of 170 to 210 g/L and an organic polymer concentration of 20 to 50 g/L.

In the case where the amount of the silicon compound in the spinning solution is smaller than the above range, alumina contained in short fibers is easily transformed into $\alpha$-alumina. Furthermore, alumina particles coarsen, thereby easily causing embrittlement of the short fibers. In the case where the amount of the silicon compound in the spinning solution is larger than the above range, the amount of silica ($SiO_2$) formed together with mullite ($3Al_2O_3 \cdot 2SiO_2$) is increased, thereby easily causing a decrease in heat resistance.

In the case where the spinning solution has an aluminum concentration of less than 170 g/L or an organic polymer concentration of less than 20 g/L, the spinning solution does not have an appropriate viscosity, thereby causing the resulting alumina/silica-based fibers to have a smaller fiber diameter. That is, the excessively large amount of free water in the spinning solution results in a low drying rate during the spinning by the blowing method to lead to excessive extension. This causes the spun precursor fibers to have varying diameters, failing to produce short fibers having a predetermined average fiber diameter and a sharp fiber diameter distribution. Furthermore, an aluminum concentration of less than 170 g/L results in a decrease in productivity. At an aluminum concentration of more than 210 g/L or an organic polymer concentration of more than 50 g/L, an excessively high viscosity is obtained in either case; thus, the solution can not be used as a spinning solution. The spinning solution preferably has an aluminum concentration of 180 to 200 g/L and an organic polymer concentration of 30 to 40 g/L.

The foregoing spinning solution is prepared by adding the silicon compound and the organic polymer to an aqueous solution of basic aluminum chloride in amounts to satisfy the foregoing ratio of $Al_2O_3:SiO_2$ and concentrating the mixture in such a manner that the aluminum concentration and the concentration of the organic polymer are within the above ranges.

<<Blowing>>

Spinning (the formation of fibers from the spinning solution) is usually performed by a blowing method in which a spinning solution is fed into a high-velocity spinning gas flow, thereby producing a short-fiber alumina precursor. The structure of a spinning nozzle used in the spinning described above is not particularly limited. For example, as described in Japanese Patent No. 2602460, a structure is preferred in which an airflow emerging from an air nozzle and the flow of a spinning solution emerging from a spinning solution supply nozzle are parallel to each other and in which the parallel flow of air is sufficiently rectified and comes into contact with the spinning solution.

With respect to spinning, preferably, fibers sufficiently drawn from the spinning solution are formed under conditions in which the evaporation of water and the decomposition of the spinning solution are prevented, and then the resulting fibers are rapidly dried. To this end, the atmosphere is preferably changed from a state in which the evaporation of water is suppressed to a state in which the evaporation of water is promoted, in the course from the formation of the fibers from the spinning solution to the arrival of the fibers at a fiber collecting device.

The alumina/silica-based fiber precursor can be collected, accumulated, and recovered in the form of a continuous sheet-like aggregate (thin-layer sheet) composed of the alumina/silica-based fiber precursor with an accumulating device having a structure in which a wire-mesh endless belt is disposed so as to be substantially perpendicular to the spinning airflow and in which the spinning airflow containing the alumina/silica-based fiber precursor impinges on the belt while the endless belt is rotated.

The thin-layer sheet preferably, but not necessarily, has a basis weight of about 10 to about 200 $g/m^2$, particularly preferably about 30 to about 100 $g/m^2$.

The thin-layer sheet recovered by the accumulating device can then be stacked. Specifically, for example, the inorganic fiber precursor aggregate (thin-layer sheet) is continuously unwound and fed to a folding device. The thin-layer sheet is folded to a predetermined width and stacked. Simultaneously, the folded sheet is continuously transferred in a direction perpendicular to a folding direction to form a laminated aggregate (laminated sheet) composed of the inorganic fiber precursor. The stacking of the thin-layer sheet in this manner provides the laminated sheet having a uniform basis weight (weight per unit area) across the entire sheet. As the foregoing folding device, a device described in Japanese Unexamined Patent Application Publication No. 2000-80547 may be used.

<Coating Step of Needling Aid or Friction-Reducing Agent>

A needling aid or a friction-reducing agent is coated to a sheet surface of the thin-layer sheet or the laminated sheet of the alumina/silica-based inorganic fiber precursor obtained by spinning, as needed. The needling aid or the friction-reducing agent is preferably coated to both surfaces of the sheet.

Any agent effective in strengthening filaments near a mat surface of the inorganic fiber precursor aggregate can be used as the needling aid. Various coating agents, such as acrylic polymer coating agents, may be used.

The friction-reducing agent may be a surfactant or an emulsion that is effective in reducing the friction between needles and the fibers . The needling aid or the friction-reducing agent can be applied by coating (wet coating) a solution or dispersion thereof.

<Needling Process>

After the needling aid and/or the friction-reducing agent is coated to the laminated sheet of the alumina/silica-based inorganic fiber precursor obtained by spinning, as needed, and then the laminated sheet is subjected to needling in which barbed needles are inserted into and withdrawn from the laminated sheet. The needling may be performed from one or both of the surfaces, preferably both of the surfaces of the laminated sheet.

The insertion and withdrawal of the needles are preferably performed in the direction perpendicular to the sheet surface of the laminated sheet. The needles are inserted deeper than the center of the laminated sheet in the thickness direction. The needles may be inserted so as to penetrate through the laminated sheet in the thickness direction.

By the needling in this way, needle marks are formed on the inorganic fiber-formed article. That is, when the needling is performed in which the barbed needles are inserted into and withdrawn from the laminated sheet, the needles allow at least some of the fibers to extend in the substantially thickness direction in positions where the needles are inserted and withdrawn. This forms the needle marks on the surface of the inorganic fiber-formed article. The filaments of the inorganic fibers extending in the substantially thickness direction inside the inorganic fiber-formed article subjected to needling are referred to as "vertical bundles".

The needling is performed in order to adjust the bulk density and the peel strength of the inorganic fiber-formed article by forming the vertical bundles.

The needle marks may penetrate through the inorganic fiber-formed article. Alternatively, the needle marks may extend from one mat surface so as not to reach the other mat surface.

<Firing Step>

The inorganic fiber-formed article is preferably a fired inorganic fiber-formed article obtained by firing the inorganic fiber precursor subjected to needling. Firing is usually performed at 900°C or higher, preferably 1,000°C to 1,300°C. A firing temperature of 900°C or higher results in sufficiently crystallized alumina/silica-based fibers having excellent strength and thus is preferred. A firing temperature of 1,300°C or lower results in alumina/silica-based fibers having appropriate strength because the grain growth of crystals of the fibers does not proceed excessively, which is preferred.

Examples

[Example 1]

<Production of Inorganic Fiber-Formed Article>

A silica sol was added to an aqueous solution of basic aluminum chloride (aluminum content: 165 g/L, Al/Cl = 1.8 (atomic ratio)) in such a manner that an ultimately obtained alumina fiber composition satisfied $Al_2O_3$:$SiO_2$ = 72:28 (ratio by weight) . A polyvinyl alcohol was added thereto, and then the mixture was concentrated to prepare a spinning solution having a viscosity of 70 poise (25°C) and an alumina-silica content of about 35% by weight.

The fibers were spun from the spinning solution by the blowing method. A spinning nozzle having the same structure as illustrated in Fig. 6 of Japanese Patent No. 2602460 was used. The fibers were collected in the form of a continuous sheet (thin-layer sheet) with an accumulating device having a structure in which a wire-mesh endless belt was disposed so as to be substantially perpendicular to the spinning airflow and in which the spinning airflow containing the alumina/silica-based fiber precursor impinged on the belt while the endless belt was rotated.

The thin-layer sheet recovered by the accumulating device was subjected to the application of a friction-reducing agent by spraying, continuously unwound, and fed to a folding device. The thin-layer sheet was folded to a predetermined width and stacked. Simultaneously, the folded sheet was continuously transferred in a direction perpendicular to a folding direction to form a laminated sheet. As the foregoing folding device, a folding device having the same structure as described in Japanese Unexamined Patent Application Publication No. 2000-80547 was used. Needling was performed by punching with a needle punching machine.

Then firing was performed at 1,200°C to form an inorganic fiber-formed article 1 formed of crystalline alumina/silica-based fibers. The inorganic fiber-formed article 1 had a basis weight of 900 g/m$^2$ (a thickness of 5.6 mm, a bulk density of 0.16 g/cm$^3$). The firing was performed with an electric furnace by heating to 1,200°C at a rate of temperature increase of 5 °C/min, holding at 1,200°C for 30 minutes, and then natural cooling.

The composition ratio of the resulting crystalline alumina/silica-based fibers was alumina/silica = 72/28 (ratio by weight). The average fiber diameter (average value of 100 fibers) of the crystalline alumina/silica-based fibers was measured by the observation of the inorganic fiber-formed article with a microscope and found to be 5.5 $\mu$m.

[Example 2]

<Manufacture of the Battery Pack Cover>

The obtained inorganic fiber-formed article and an aluminum alloy plate (Al alloy plate A5052 having a thickness of 0.8 mm) as a cover base material were laminated to form a laminate. The battery pack cover 1 of Example 1 was thus manufactured.

[Example 2]

An inorganic fiber-formed article 2 was produced by the same method as Example 1 except that the inorganic fiber-formed article was reduced in its fiber amount per unit area to have a basis weight of 600 g/m$^2$ (thickness of 4.8 mm, bulk density of 0.12 g/cm$^3$). An aluminum alloy plate (Al alloy plate A5052 having a thickness of 0.8 mm) was laminated to form a laminate, thereby producing a battery pack cover 2 of Example 2. The composition ratio of the resulting crystalline alumina/silica-based fibers was alumina/silica = 72/28 (ratio by weight). The average fiber diameter (average value of 100 fibers) of the crystalline alumina/silica-based fibers was measured by the observation of the inorganic fiber-formed article with a microscope and found to be 5.5 $\mu$m.

[Example 3]

An inorganic fiber-formed article 3 was produced by the same method as Example 1, except that the basis weight was reduced to 900 g/m$^2$ (thickness: 6.3 mm, bulk density: 0.14 g/cm$^3$) by reducing the needle mark density to reduce the bulk density. An aluminum alloy plate (Al alloy plate A5052 having a thickness of 0.8 mm) was laminated to form a laminate, thereby producing a battery pack cover 3 of Example 3. The composition ratio of the resulting crystalline alumina/silica-based fibers was alumina/silica = 72/28 (ratio by weight) . The average fiber diameter (average value of 100 fibers) of the crystalline alumina/silica-based fibers was measured by the observation of the inorganic fiber-formed article with a microscope and found to be 5.5 $\mu$m.

[Example 4]

As the inorganic fiber-formed article 4, Arsen NBK80-10 from Denka Company Limited was used.

The composition ratio of this crystalline alumina/silica fibers is alumina/silica = 80/20 (ratio by weight) . The average fiber diameter (average value of 100 fibers) of the crystalline alumina/silica-based fibers was measured by the observation of the inorganic fiber-formed article with a microscope and found to be 4.4 $\mu$m. The battery pack cover 4 of Example 4 was manufactured by laminating the inorganic fiber-formed article 4 and an aluminum alloy plate (Al alloy plate A5052 having a thickness of 0.8 mm) to form a laminate.

[Example 5]

As the inorganic fiber-formed article 5, FMX16 blanket LXS150 from ITM Co., Ltd. (now Isolite Insulating Products Co., Ltd.) was used. The composition ratio of the crystalline alumina/silica-based fibers was alumina/silica = 72/28 (ratio by weight). The average fiber diameter (average value of 100 fibers) of the crystalline alumina/silica-based fibers was measured by the observation of the inorganic fiber-formed article with a microscope and found to be 4.1 $\mu$m. The battery pack cover 5 of Example 5 was manufactured by laminating the inorganic fiber-formed article 5 and an aluminum alloy plate (Al alloy plate A5052 having a thickness of 0.8 mm) to form a laminate.

[Example 6]

An inorganic fiber-formed article 6 was produced by the same method as Example 1 except that the inorganic fiber-formed article was reduced in its fiber amount per unit area to have a basis weight of 432 g/m$^2$ (thickness of 3. 5mm, bulk density of 0.12 g/cm$^3$). An aluminum alloy plate (Al alloy plate A5052 having a thickness of 0.8 mm) was laminated to form a laminate, thereby producing a battery pack cover 6 of Example 6. The composition ratio of the resulting crystalline alumina/silica-based fibers was alumina/silica = 72/28 (ratio by weight). The average fiber diameter (average value of 100 fibers) of the crystalline alumina/silica-based fibers was measured by the observation of the inorganic fiber-formed article with a microscope and found to be 5.6 $\mu$m.

[Comparative Example 1]

The inorganic fiber-formed article 1 obtained in Example 1 was pulverized to be made into short fibers using a dry fibrillation device. Water was added to 92.4% by weight of the inorganic fibers to obtain a dispersion liquid. A slurry was prepared by adding 6.0% by weight of a modified acrylic acid ester copolymer (latex), 0.5% by weight of an anionic acrylic resin (paper strength agent), 1.0% by weight of aluminum sulfate, and 0.1% by weight of a polymer flocculating agent to the dispersion liquid and stirring. An inorganic fiber-formed article was prepared from the slurry using a papermaking machine. The inorganic fiber-formed article was prepared so that the basis weight after drying is 700 g/m$^2$ (thickness: 5.3 mm, bulk density: 0.13 g/cm$^3$) by adjusting the suction rate and slurry-supply rate. Thereafter, the inorganic fiber-formed article and an aluminum alloy plate (Al alloy plate A5052, thickness 0.8 mm) were laminated to form a laminate, whereby a battery pack cover of Comparative Example 1 was manufactured.

≪Measurement of Physical Properties of Inorganic Fiber-Formed Article ≫

The tensile strength, the fiber length, the thickness, and the needle mark density of the inorganic fiber-formed articles obtained in the above Examples and Comparative Examples were measured as follows . Table 1 shows the results.

[Method for Measuring Tensile Strength]

The tensile strength was measured using a tensile tester. The size of the parallel portion (effective portion) of the test piece was 25 mm×100 mm, and the overall size was 25 mm×160 mm. The inorganic fiber-formed article in the product state was cut into the above size with a punching die, attached to the tensile tester, and pulled at a speed of 25 mm/min. The maximum value of the load was defined as the tensile strength.

[Method for Measuring Average Fiber Length]

The average fiber length was measured using an optical microscope. A sample of 2 g was taken from the inorganic fiber-formed article with tweezers, and put into a 1000 ml beaker together with 800 ml of water. Ultrasonic dispersion was performed with a device manufactured by Tokyo Rika Kikai Co., Ltd. (model: USC-200Z38S-23) . Then, 20 to 25 ml of the dispersed liquid was taken and fed into a 200 ml beaker containing 150 ml of water, whereby a sample liquid was prepared. The sample liquid was strongly stirred with a stirrer. After that, 1 to 2 ml was sampled, dropped onto a slide glass, a cover glass was placed, and the fibers were observed under an optical microscope. The length of the fibers displayed on the microscope monitor was read at 1 mm intervals. The number of samples was 300, and each fiber length was calculated by the following conversion formula.

```
fiber length (μm) = [measured value (mm)] / [magnification of the microscope] · 1000
```

[Method for Measuring Thickness]

The thickness was measured using a digital dial gauge. The measurement load was 4.9 kPa (50 g/cm$^2$) and the smallest scale division of measurement was 0.01 mm. A test piece was cut out by the flame shielding test described later. The test piece was randomly measured for thickness at five points using the digital dial gauge, and the average value of the five points was taken as the value of the measurement.

[Method for Measuring Needle Mark Density]

A test specimen having a unit area was cut out from the inorganic fiber-formed article, and the specimen was peeled into two pieces from the center of the thickness thereof, resulting that two peeled surfaces were produced. The number of needle marks on each peeled surface were counted. A vertical bundle extruding from the peeled surface was also counted as a needle mark. The number of needle marks per unit area was an average value of the number of needle marks on one peeled surface and the number of needle marks on the other peeled surface.
When visible light was applied to one mat surface opposite the peeled surface of the inorganic fiber-formed article, transmitted light was observed as light spots on the peeled surface. By counting the number of the light spots on the peeled surface and the number of the vertical bundles extruding from the peeled surface, the number of needle marks per unit area can be counted.
As a result of measuring the needle mark densities of Examples 1 and 2 by the above method, they were 27.3 marks/cm$^2$ and 19.3 marks/cm$^2$, respectively.

≪Flame Shielding Test Method≫

Each of the inorganic fiber-formed articles 1 to 8 of Examples 1 to 7 and Comparative Example 1 was cut into a size of 3600 mm$^2$ with a punching die. Each inorganic fiber-formed article thus cut out was laminated with an aluminum alloy plate (3600 mm$^2$, thickness 0.8 mm) to make a test piece, and the following flame shielding test was performed.
The test piece was held by stainless steel jigs so that the test piece was placed at a position 70 mm away from the tip of a torch burner. The test piece was placed so that the side of the inorganic fiber-formed article faced the burner and further the surface of the inorganic fiber-formed article was substantially perpendicular to the axial direction of the burner.
O$_2$ and C$_2$H$_2$ were fed to the torch burner (Sakaguchi Seisakusho: WT-01 having a nozzle diameter of 1.2 mm) at feed pressure of O$_2$: 0.5 MPa, C$_2$H$_2$: 0.02 MPa. Air was fed to an air nozzle at an air pressure of 0.2 MPa. The air nozzle (discharge diameter 3.0 mm) was arranged so that it was 100 mm away from the test piece, and the surface of the inorganic fiber-formed article was substantially perpendicular to the axial direction of the air nozzle. A flame of 1000°C was shot toward the test piece for 5 minutes.
The test piece was removed after 5 minutes from the start of shooting the flame toward the inorganic fiber-formed article of the test piece. The test piece was visually confirmed whether or not the inorganic fiber-formed article had been penetrated by the flame. Table 1 shows the results.

[Table 1]

| | Battery pack cover configuration | | | | Evaluation |
|---|---|---|---|---|---|
| | Inorganic fiber formed-article | | | Cover base material | Flame test |
| | Thickness (mm) | Tensile strength [N] | Average fiber length (mm) | | Penetration |
| Example 1 | 5.6 | 65.5 | 7.9 | Anuminum alloy | none |

(continued)

| | Battery pack cover configuration | | | | Evaluation |
| | Inorganic fiber formed-article | | | Cover base material | Flame test |
| | Thickness (mm) | Tensile strength [N] | Average fiber length (mm) | | Penetration |
| --- | --- | --- | --- | --- | --- |
| Example 2 | 4.8 | 34.1 | 7.1 | Anuminum alloy | none |
| Example 3 | 6.3 | 45.9 | 5.7 | Anuminum alloy | none |
| Example 4 | 14.8 | 21.5 | 3.1 | Anuminum alloy | none |
| Example 5 | 8.0 | 30.1 | 5.2 | Anuminum alloy | none |
| Example 6 | 4.5 | 22. 0 | 5.0 | Anuminum alloy | none |
| Comparative Example 1 | 5.3 | 13 . 6 | 0.3 | Anuminum alloy | penetrated |

<Discussion>

As shown in Table 1, the battery pack cover of the present invention does not allow flames to penetrate the inorganic fiber-formed article, and has excellent flame shielding properties.

Although the present invention has been described in detail using specific embodiments, it will be apparent to those skilled in the art that various modifications can be made without departing from the spirit and scope of the present invention.

This application is based on Japanese Patent Application No. 2020-206897 filed on December 14, 2020, which is incorporated by reference in its entirety.

Reference signs list

1      Battery pack unit
2      Housing
3      Battery pack cover
4      Inorganic fiber-formed article
5      Cover base material
10     battery pack
11     Battery module

**Claims**

1.   A battery pack cover for use in a battery pack, wherein the battery pack cover comprises a cover base material and an inorganic fiber-formed article having a tensile strength of 20 N or more in the following tensile test.
<Tensile test> A test piece with a width of 25 mm and a length of 160 mm is punched out from the inorganic fiber-formed article, the test piece is pulled in the longitudinal direction at a speed of 25 mm/min using a tensile tester, and let the maximum load value be the tensile strength.

2.   The battery pack cover according to claim 1, wherein the cover base material is a metal base material.

3.   The battery pack cover according to claim 1 or 2, wherein the battery pack cover is a laminate of the cover base material and the inorganic fiber-formed article.

4.   The battery pack cover according to any one of claims 1 to 3, wherein the battery pack cover does not penetrate through a flame shielding test at a flame temperature of 1000°C for 5 minutes.

5.   The battery pack cover according to any one of claims 1 to 4, wherein the inorganic fiber-formed article is composed of inorganic fibers having an average fiber length of 3 mm or more.

6.  The battery pack cover according to any one of claims 1 to 5, wherein the inorganic fiber-formed article is a woven fabric or a non-woven fabric.

7.  The battery pack cover according to any one of claims 1 to 6, wherein the inorganic fiber-formed article is a needled blanket.

8.  A battery pack unit comprising the battery pack cover according to any one of claims 1 to 7 and a battery pack.

9.  The battery pack unit according to claim 8, wherein the inorganic fiber-formed article of the battery pack cover is arranged on the battery pack side.

10. An electric mobility comprising the battery pack unit according to claim 8 or 9.

Fig. 1

## INTERNATIONAL SEARCH REPORT

| International application No. |
| --- |
| **PCT/JP2021/044863** |

### A. CLASSIFICATION OF SUBJECT MATTER

***B60K 1/04***(2019.01)i; ***H01M 50/204***(2021.01)i; ***H01M 50/249***(2021.01)i; ***H01M 50/28***(2021.01)i; ***H01M 50/282***(2021.01)i
FI:   H01M50/204 401F; B60K1/04 Z; H01M50/28; H01M50/282; H01M50/249

According to International Patent Classification (IPC) or to both national classification and IPC

### B. FIELDS SEARCHED

Minimum documentation searched (classification system followed by classification symbols)

B60K1/04; H01M50/204; H01M50/249; H01M50/28; H01M50/282

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2019-123100 A (PDM CO LTD) 25 July 2019 (2019-07-25) | 1-10 |
| | paragraphs [0006]-[0007], [0026]-[0033], [0055], [0069]-[0070], [0078]-[0081], fig. 1-3 | |
| Y | | 1-10 |
| Y | JP 60-239232 A (IST KK) 28 November 1985 (1985-11-28) | 1-10 |
| | p. 3, lower right column, lines 9-15 | |
| A | WO 2018/011384 A1 (VON ROLL SCHWEIZ AG) 18 January 2018 (2018-01-18) | 1-10 |
| | claims | |
| P, A | WO 2021/106313 A1 (PANASONIC IP MAN CO LTD) 03 June 2021 (2021-06-03) | 1-10 |
| | claims | |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 January 2022** | **01 February 2022** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/044863** |

| Patent document cited in search report | | | Publication date (day/month/year) | Patent family member(s) | | | Publication date (day/month/year) |
| --- | --- | --- | --- | --- | --- | --- | --- |
| JP | 2019-123100 | A | 25 July 2019 | (Family: none) | | | |
| JP | 60-239232 | A | 28 November 1985 | (Family: none) | | | |
| WO | 2018/011384 | A1 | 18 January 2018 | EP | 3269540 | A1 | |
| | | | | TW | 201829185 | A | |
| WO | 2021/106313 | A1 | 03 June 2021 | (Family: none) | | | |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012167921 A
- EP 2506336 A1
- JP 2602460 B
- JP 2000080547 A
- JP 2020206897 A